# DEMANDE DE BREVET EUROPEEN

(11) **EP 2 533 512 A1**
(43) Date de publication de la demande: **12.12.2012**
(21) Numéro de dépôt: 11305721.0
(22) Date de dépôt: 09.06.2011
(51) Int. Cl.: H04N 1/00

(54) **Système de transmission d'une photographie stockée dans une mémoire d'une carte à mémoire insérée dans un appareil, carte à mémoire et terminal portable correspondant**

(71) Demandeur: Gemalto SA, 92190 Meudon (FR)
(72) Inventeur: Martin, Christophe, 13600 CEYRESTE (FR); Chene, Gilles, 13011 MARSEILLE (FR)

(57) **Abrégé**

L'invention concerne notamment un système de transmission d'au moins une photographie stockée dans une mémoire (15) d'une carte à mémoire (13) insérée dans un appareil (10), notamment un appareil photo. La carte à mémoire (13) comprend des moyens (19) de transfert sans fil vers au moins un site distant (17) de la photographie via une interface de communication, l'interface de communication comprenant un réseau cellulaire (18).

## Description

Le domaine de l'invention est celui des télécommunications. Plus précisément, la présente invention concerne notamment un système permettant de transmettre une ou plusieurs photographies stockées dans une mémoire d'une carte à mémoire insérée dans un appareil, par exemple un appareil photo.

Les appareils photos ou caméscopes numériques actuels ne stockent plus les photographies ou films sur bandes mais sur des cartes à mémoire. Ces cartes à mémoire peuvent être de différents types : Memory Stick, Compact Flash, MMC, SD, xD, ..., le format le plus répandu étant le format SD (ou mini SD, voire micro SD).

Le problème fréquemment rencontré avec ces appareils est que lorsque la carte à mémoire est pleine, il n'est plus possible d'y stocker des photos ni de filmer une scène. L'utilisateur doit donc prévoir un nombre suffisant de cartes à mémoire s'il se rend à un endroit (par exemple en vacances) où il ne peut pas transférer le contenu de sa carte à mémoire sur un autre support, par exemple un disque dur ou un CD à l'aide d'un ordinateur personnel.

Afin de remédier à ce problème, certains fabricants d'appareils photo numériques ont incorporé dans leurs appareils numériques un logiciel apte à transmettre automatiquement vers un site distant une photo dès que celle-ci est prise. Le site distant est par exemple Flickr™ ou Picassa™. Le transfert automatique des photos prises permet d'avoir une carte mémoire qui est toujours pleinement opérationnelle. L'appareil numérique comporte à cet effet un modem Wifi. L'inconvénient de ces appareils est qu'il est nécessaire d'être à proximité d'un ordinateur ou d'un modem Wifi pour que le transfert des photos puisse être réalisé. De plus, cette solution n'est fonctionnelle que pour les appareils numériques disposant de ce logiciel.

Une autre solution connue consiste à équiper la carte mémoire avec un modem Wifi. Cette solution est par exemple proposée par la société eye-fi™ pour des cartes au format SD. Les photos enregistrées sur la carte SD peuvent être transférées via Wifi sur un ordinateur comprenant un modem Wifi. Mais si l'appareil numérique peut être standard (c'est-à-dire non comprendre un logiciel ad-hoc), la proximité d'un modem Wifi reste nécessaire.

La présente invention a notamment pour objectif de remédier à ces inconvénients.

Plus précisément, un des objectifs de l'invention est de fournir un système permettant à un utilisateur d'un appareil numérique, tel qu'un appareil photo ou un caméscope, comprenant une carte mémoire destinée à stocker des photos ou des films, de transmettre ces photos ou ces films vers un site distant, sans être à proximité d'un terminal (ayant par exemple une fonctionnalité Wifi).

Cet objectif, ainsi que d'autres qui apparaîtront par la suite, est atteint grâce à un système de transmission d'au moins une photographie stockée dans une mémoire d'une carte à mémoire insérée dans un appareil, notamment un appareil photo, la carte à mémoire comprenant des moyens de transfert sans fil vers au moins un site distant de la photographie via une interface de communication, cette interface de communication comprenant un réseau cellulaire.

L'avantage d'utiliser un réseau cellulaire plutôt qu'un réseau de courte portée tel qu'un réseau Wifi est qu'il est possible à partir de n'importe quel endroit de transférer des photos vers un site distant. Il n'est pas nécessaire d'apporter une modification à l'appareil et le problème de capacité de la carte mémoire est résolu.

Préférentiellement, les moyens de transfert sans fil sont des moyens de communication courte distance coopérant avec un terminal portable, le terminal portable comprenant d'une part une interface de communication courte distance apte à communiquer avec la carte à mémoire et d'autre part une application permettant de transférer vers le au moins un site distant la photographie via le réseau cellulaire, une fois cette dernière transmise de la carte à mémoire vers le terminal portable.

Les moyens de transfert sans fil comprennent avantageusement un modem de type 3G ou 4G.

La carte à mémoire est préférentiellement de format SD.

Avantageusement, la carte à mémoire comprend des moyens pour déclencher automatiquement la transmission de la photographie vers le site distant.

Dans un autre mode de réalisation, la carte à mémoire comprend des moyens pour déclencher manuellement la transmission de la photographie vers le site distant.

Les moyens pour déclencher manuellement la transmission de la photographie vers le site distant comprennent préférentiellement un accéléromètre.

L'invention concerne également une carte à mémoire destinée à être insérée dans un appareil photo, cette carte comprenant un modem de type 3G ou 4G pour transférer au moins une photographie stockée dans sa mémoire vers un site distant via un réseau cellulaire.

De préférence, la carte comporte:
- un émulateur de périphérique apte à recevoir une sélection de photographies sélectionnées par une application de type PictBridge™ installée dans l'appareil photo ;
- des moyens pour transmettre cette sélection de photographies vers le site distant.

Enfin, l'invention concerne un terminal portable destiné à coopérer avec une carte à mémoire comprise dans un appareil photo, ce terminal comportant une application permettant de recevoir par une liaison sans fil de courte distance au moins une photographie stockée dans la carte à mémoire et de retransmettre la photographie vers un site distant via un réseau cellulaire.

Le terminal portable est de préférence un téléphone mobile.

D'autres caractéristiques et avantages de l'invention apparaîtront à la lecture de la description suivante d'un mode de réalisation préférentiel, donné à titre illustratif et non limitatif, et de la figure unique annexée qui représente un système de transmission selon la présente invention.

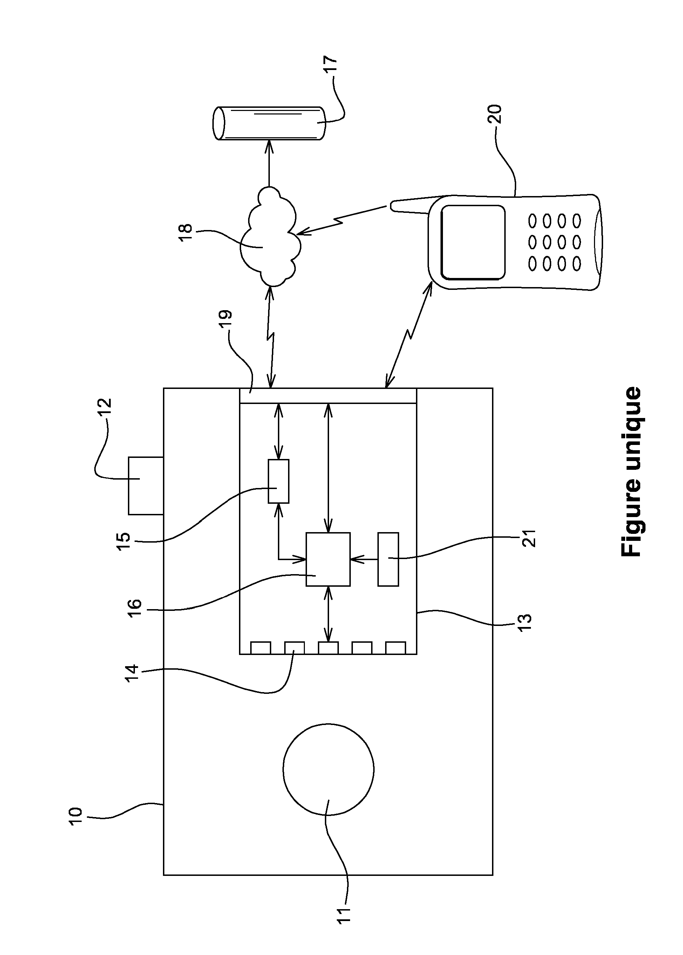

Le système de la figure 1 comprend un appareil 10, tel que par exemple un appareil photo muni d'un objectif 11 et d'un déclencheur 12 de prise de vue. L'appareil 10 renferme une carte mémoire 13 extractible, par exemple de format SD. La carte mémoire 13 selon l'invention comprend des connecteurs 14 destinés à entrer en contact physique avec des contacts correspondants de l'appareil 10. Elle comporte également une mémoire 15 destinée à stocker les photographies prises par l'appareil 10.

La carte mémoire 13 selon l'invention comporte un microprocesseur 16 géré par un logiciel destiné à permettre le transfert des photographies stockées dans la mémoire 15 vers au moins un site distant 17, via un réseau cellulaire 18. Le réseau cellulaire 18 comprend de manière connue des stations de base (BTS), des contrôleurs de stations de base (BSC), un HLR et une ou plusieurs MSC/VLR. Ce réseau 18 est relié au site distant 17.

Selon l'invention, la carte mémoire 13 comporte également une interface 19 comprenant des moyens de transfert sans fil vers le site distant 17 des photographies stockées dans la mémoire 15.

Deux modes de réalisation de l'interface 19 sont possibles :

Dans un premier mode de réalisation, les moyens de transfert sans fil sont des moyens de communication courte distance coopérant avec un terminal portable 20. Ces moyens de communication courte distance sont par exemple aptes à établir une liaison Bluetooth avec le terminal 20. Le terminal 20 comprend alors d'une part une interface de type Bluetooth apte à communiquer avec la carte à mémoire 15 et d'autre part une application permettant de transférer vers le site distant 17 la ou les photographies à transférer, via le réseau cellulaire 18, une fois ces dernières transmises de la carte mémoire 15 vers le terminal portable 20.

Dans un second mode de réalisation, les moyens de transfert sans fil comprennent un modem de type 3G ou 4G (LTE) apte à établir directement une communication avec le réseau cellulaire 18. Il n'est dans ce cas pas nécessaire de passer par l'intermédiaire d'un terminal 20 comme dans le cas du premier mode de réalisation.

Dans ces deux modes de réalisation, aucun logiciel spécifique n'a besoin d'être installé dans l'appareil 10, toute l'intelligence permettant de transférer des photographies vers le site distant 17 étant contenue dans la carte à mémoire 13.

Le transfert des photographies vers le site 17 peut s'opérer de manière automatique ou manuelle.

Un transfert automatique peut par exemple être réalisé dès que le taux de remplissage de la mémoire 15 atteint un niveau de seuil prédéfini, par exemple une mémoire 15 remplie à 80%. Un transfert automatique peut également avoir lieu après chaque prise d'une photographie. Dans ce cas, la mémoire 15 est normalement toujours vide ou ne contient au maximum qu'une photographie. Le logiciel pilotant le microprocesseur 16 décide du moment de transfert des photographies.

La carte à mémoire 13 peut également comporter des moyens pour déclencher manuellement la transmission d'une ou de plusieurs photographies vers le site distant 17. Ces moyens comprennent par exemple un accéléromètre 21 à l'aide duquel un geste prédéterminé de l'utilisateur de l'appareil 10 peut être détecté, par exemple le fait de le secouer ou de le retourner successivement deux ou trois fois.

Si l'appareil 10 embarque une application de type PictBridge™, il est possible de laisser à l'utilisateur le choix des photographies à transférer, celles non transférées restant stockées dans la carte à mémoire 13. PictBridge™ est une norme informatique qui a été créée afin de permettre l'impression directe d'images depuis un appareil tel qu'un appareil photo ou un téléphone portable vers une imprimante, sans passer par un ordinateur. A cet effet, la carte à mémoire 13 émule un périphérique de type PictBridge™ et l'application PictBridge™ comprise dans l'appareil 10 sélectionne dans la mémoire 15 les photographies à transférer. Une autre solution consiste en ce que le terminal portable 20 émule un périphérique de type PictBridge™. L'appareil 10 croyant avoir à faire à une imprimante, lui transmet les photographies sélectionnées par la liaison courte distance et le terminal 20 les transmet au réseau cellulaire 18 qui les retransmet au site distant 17.

La liaison courte distance entre la carte 13 et le terminal 20 est de préférence de type Bluetooth mais toute autre liaison peut être utilisée (Wifi, UWB, IR,...).

L'invention concerne également une carte à mémoire telle que 13 destinée à être insérée dans un appareil photo 10, cette carte mémoire 13 comprenant un modem de type 3G ou 4G au niveau de l'interface 19 pour transférer au moins une photographie stockée dans sa mémoire 15 vers un site distant 17 via un réseau cellulaire 18. La carte à mémoire 13 comporte :
- un émulateur de périphérique apte à recevoir une sélection de photographies sélectionnées par une application de type PictBridge™ installée dans l'appareil photo 10 ;
- des moyens pour transmettre cette sélection de photographies vers le site distant 17.

L'invention concerne également le terminal portable 20 destiné à coopérer avec la carte à mémoire 13 comprise dans l'appareil photo 10, le terminal 20 comportant une application permettant de recevoir par une liaison sans fil de courte distance au moins une photographie stockée dans la carte à mémoire 13 et de retransmettre cette photographie vers le site distant 17 via le réseau cellulaire 18.

La carte à mémoire 13 selon l'invention peut également contenir une fonctionnalité de compression des données en fichier d'archives avant transmission vers le site distant 17.

## Revendications

1. Système de transmission d'au moins une photographie stockée dans une mémoire (15) d'une carte à mémoire (13) insérée dans un appareil (10), notamment un appareil photo, ladite carte à mémoire (13) comprenant des moyens (19) de transfert sans fil vers au moins un site distant (17) de ladite photographie via une interface de communication, **caractérisé en ce que** ladite interface de communication comprend un réseau cellulaire (18).

2. Système selon la revendication 1, **caractérisé en ce que** lesdits moyens (19) de transfert sans fil sont des moyens de communication courte distance coopérant avec un terminal portable (20), ledit terminal portable (20) comprenant d'une part une interface de communication courte distance apte à communiquer avec ladite carte à mémoire (13) et d'autre part une application permettant de transférer vers ledit au moins un site distant (17) ladite photographie via ledit réseau cellulaire (18), une fois cette dernière transmise de ladite carte à mémoire (13) vers ledit terminal portable (20).

3. Système selon la revendication 1, **caractérisé en ce que** lesdits moyens (19) de transfert sans fil comprennent un modem de type 3G ou 4G.

4. Système selon l'une des revendications 1 à 3, **caractérisé en ce que** ladite carte à mémoire (13) est de format SD.

5. Système selon l'une des revendications 1 à 5, **caractérisé en ce que** ladite carte à mémoire (13) comprend des moyens pour déclencher automatiquement la transmission de ladite photographie vers ledit site distant (17).

6. Système selon l'une des revendications 1 à 5, **caractérisé en ce que** ladite carte à mémoire (13) comprend des moyens (21) pour déclencher manuellement la transmission de ladite photographie vers ledit site distant (17).

7. Système selon la revendication 6, **caractérisé en ce que** lesdits moyens pour déclencher manuellement la transmission de ladite photographie vers ledit site distant comprennent un accéléromètre (17).

8. Carte à mémoire (13) destinée à être insérée dans un appareil (10), **caractérisée en ce qu'**elle comprend un modem de type 3G ou 4G pour transférer au moins une photographie stockée dans sa mémoire (15) vers un site distant (17) via un réseau cellulaire (18).

9. Carte à mémoire selon la revendication 8, **caractérisée en ce qu'**elle comporte :
- un émulateur de périphérique apte à recevoir une sélection de photographies sélectionnées par une application de type PictBridge™ installée dans ledit appareil ;
- des moyens (19) pour transmettre ladite sélection de photographies vers ledit site distant (17).

10. Terminal portable (20) destiné à coopérer avec une carte à mémoire (13) comprise dans un appareil (10) tel qu'un appareil photo, **caractérisé en ce qu'**il comporte une application permettant de recevoir par une liaison sans fil de courte distance au moins une photographie stockée dans ladite carte à mémoire (13) et de retransmettre ladite photographie vers un site distant (17) via un réseau cellulaire (18).
